# EUROPÄISCHE PATENTSCHRIFT

(11) **EP 1 457 097 B1**
(45) Veröffentlichungstag und Bekanntmachung des Hinweises auf die Patenterteilung: **02.04.2008**
(21) Anmeldenummer: 02785201.1
(22) Anmeldetag: 11.10.2002
(51) Int. Cl.: H05B 41/285, H02H 11/00

(54) **ELEKTRONISCHES VORSCHALTGERÄT MIT ÜBERSPANNUNGSÜBERWACHUNG**
ELECTRONIC BALLAST WITH AN OVERVOLTAGE MONITORING DEVICE
BALLASTE ELECTRONIQUE COMPRENANT UN DISPOSITIF DE SURVEILLANCE CONTRE LA SURTENSION

(30) Priorität: 20.12.2001 DE 10163034
(43) Veröffentlichungstag der Anmeldung: 15.09.2004
(73) Patentinhaber: TridonicAtco GmbH & Co. KG, 6851 Dornbirn (AT)
(72) Erfinder: SÖHNEL, Christian, A-6844 Altach (AT)
(74) Vertreter: Rupp, Christian
(86) Internationale Anmeldenummer: PCT/EP2002/011422
(87) Internationale Veröffentlichungsnummer: WO 2003/055281

(56) Entgegenhaltungen:
- EP-A- 0 411 618
- EP-A- 0 450 728
- EP-A- 0 677 982
- WO-A-00/69044
- WO-A-98/47324
- DE-A- 10 013 279

## Beschreibung

Die vorliegende Erfindung betrifft ein elektronisches Vorschaltgerät zum Betreiben mindestens einer Gasentladungslampe.

Werden mehrere elektronische Vorschaltgeräte zum Betreiben von Gasentladungslampen zum Bilden einer größeren Beleuchtungsanlage gemeinsam verdrahtet, so werden üblicherweise zunächst die Phasenanschlüsse und die Nullleiter der Vorschaltgeräte miteinander verbunden und anschließend an das Netz angeschlossen. Wenn die gemeinsame Verbindung der Nullleiter der Vorschaltgeräte nicht oder nur unzureichend mit dem Netz-Nullleiter verbunden wird oder andere Fehler bei der Verdrahtung auftreten, kann an den Vorschaltgeräten ein undefinierter Spannungszustand entstehen, mit der Folge, dass die Spannungen oberhalb der normalen Versorgungsspannung im Bereich zwischen 220 und 380 Volt liegen.

Diese Überspannung bringt die Gefahr mit sich, dass die Geräte zerstört werden, falls nicht rechtzeitig die Ursachen der fehlerhaften Verdrahtung behoben werden. Zwar bestünde die Möglichkeit, die Vorschaltgeräte derart auszubilden, dass sie die Überspannung selbständig kompensieren, hierbei würde jedoch eine nicht unbeachtliche Leistung ohne Nutzen verbraucht werden. Aus diesem Grund sind die Vorschaltgeräte in der Regel derart ausgebildet, dass sie bei Überspannungen zumindest für einen begrenzten Zeitraum arbeiten. In diesem Fall ist dann allerdings eine möglichst frühzeitige Erkennung des Überspannungs-Zustands notwendig, um geeignete Maßnahmen treffen zu können.

Aus der DE 100 13 279 A1 ist ein elektronisches Vorschaltgerät mit einer Überspannungs-Überwachungsvorrichtung bekannt. Wenn eine Überspannung am Ausgang einer Gleichrichterbrücke vorliegt, wird eine Abschaltung oder eine Leistungsreduzierung vorgenommen.

Aus der WO 00/69044 ist eine Überspannungsschutzschaltung bekannt, bei der ein Strombegrenzungsmittel in Form eines PTC-Widerstands vorgesehen ist. Bei Anliegen einer Überspannung erfolgt ein einmaliger Übergang auf eine Leistungsreduktion.

Der vorliegenden Erfindung liegt daher die Aufgabe zugrunde, ein elektronisches Vorschaltgeräte zum Betreiben mindestens einer Gasentladungslampe derart auszugestalten, dass es die Erkennung von Fehlzuständen in der Spannungsversorgung ermöglicht.

Die Aufgabe wird durch ein elektronisches Vorschaltgeräte, welches die Merkmale des Anspruches 1 aufweist, gelöst. Dieses zeichnet sich durch eine Überspannung-Überwachungsvorrichtung aus, welche die dem elektronischen Vorschaltgerät zugeführte Versorgungsspannung überwacht und für den Fall, dass die Versorgungsspannung einen vorgegebenen Nennwert überschreitet, ein optisch wahrnehmbares Warnsignal ausgibt. Die Steuerschaltung schaltet als Reaktion auf das empfangende Überspannungssignal die Lampe periodisch ein und aus oder moduliert die Helligkeit der Lampe periodisch. Das Vorschaltgerät selbst ist somit nicht in der Lage, der Überspannung entgegenzuwirken. Stattdessen wird sichergestellt, dass Fehler in der Spannungsversorgung unmittelbar nach dem Einschalten der Lampe angezeigt werden, so dass entsprechende Maßnahmen getroffen werden können, um die Überspannung zu beseitigen. Durch die erfindungsgemäße Maßnahme wird somit die Betriebssicherheit des Vorschaltgeräts deutlich erhöht.

Weiterbildungen der Erfindung sind Gegenstand der Unteransprüche. So wird der Überspannungs-Überwachungsvorrichtung als Eingangssignal vorzugsweise die von einer eingangsseitig angeordneten Gleichrichterschaltung des Vorschaltgerätes gleichgerichtete Versorgungsspannung zugeführt. Das erfasste Signal wird dann mit Hilfe eines Komparators mit einen Nennwert verglichen. Alternativ zu einem einfachen Komparator kann allerdings auch die Verwendung eines Analog/Digital-Wandlers vorgesehen sein, der den erfassten Messwert in einen aus mindestens 2 bit bestehenden Digitalwert umsetzt, wodurch die Genauigkeit der Überspannungs-Überwachung erhöht wird.

Vorzugsweise übermittelt die Überspannungs-Überwachungsvorrichtung beim Erkennen eines Überspannungszustandes ein entsprechendes Signal an eine Steuerschaltung, die für die Ansteuerung des Wechselrichters des Vorschaltgeräts vorgesehen ist. Eine besonders elegante Weiterbildung der Erfindung besteht dann darin, die periodische Helligkeitsveränderung der Lampe dadurch zu erzeugen, dass auf den Regelkreis zum Betreiben des Wechselrichters Einfluss genommen wird. Erfasst beispielweise die Steuerschaltung einen Betriebsparameter des Lastkreises, vergleicht diesen mit einem Referenzwert und erzeugt in Abhängigkeit von dem Vergleichsergebnis Steuersignale zum Ansteuern des Wechselrichters, so kann vorgesehen sein, dass der Referenzwert des Regelkreises periodisch verändert wird. Durch die Veränderung des Referenzwertes wird die Lampe automatisch mit einer modulierten Helligkeit betrieben, ohne dass hierzu besondere Maßnahmen notwendig wären.

Eine andere Weiterbildung der Erfindung besteht darin, den Regelkreis digital auszugestalten. Dies wird dadurch erreicht, dass die Steuerschaltung einen Analog/Digital-Wandler zum Umsetzen des erfassten Betriebsparameters des Lastkreises in einen aus mindestens 2 bit bestehenden Digitalwert aufweist, wobei die Steuerschaltung auf Basis dieses Digitalwerts in einem digitalen Regelkreis eine Schaltinformation zum Betreiben des Wechselrichters berechnet und an eine Treiberschaltung übermitteln, die die Schaltinformationen in entsprechende Steuersignale zum Betreiben des Wechselrichters umsetzt. Der Analog/Digital-Wandler kann dann im Zeitmultiplex arbeiten und in regelmäßigen Abständen auch zur Erfassung und Bewertung der Versorgungsspannung verwendet werden. Diese Variante ermöglicht eine größtmögliche Integration des gesamten Vorschaltgeräts, da die Bestandteile der Steuerschaltung in eine einzige Schaltung integriert und gleichzeitig auch zur Realisierung der Überspannungs-Überwachung verwendet werden können. Insbesondere kann vorgesehen sein, die Steuerschaltung als anwendungsspezifische integrierte Schaltung (application specific integrated circuit- ASIC) auszubilden.

Im folgenden soll die Erfindung anhand der beiliegenden Zeichnung, die ein erfindungsgemäßes elektronisches Vorschaltgerät schematisch darstellt, näher erläutert werden.

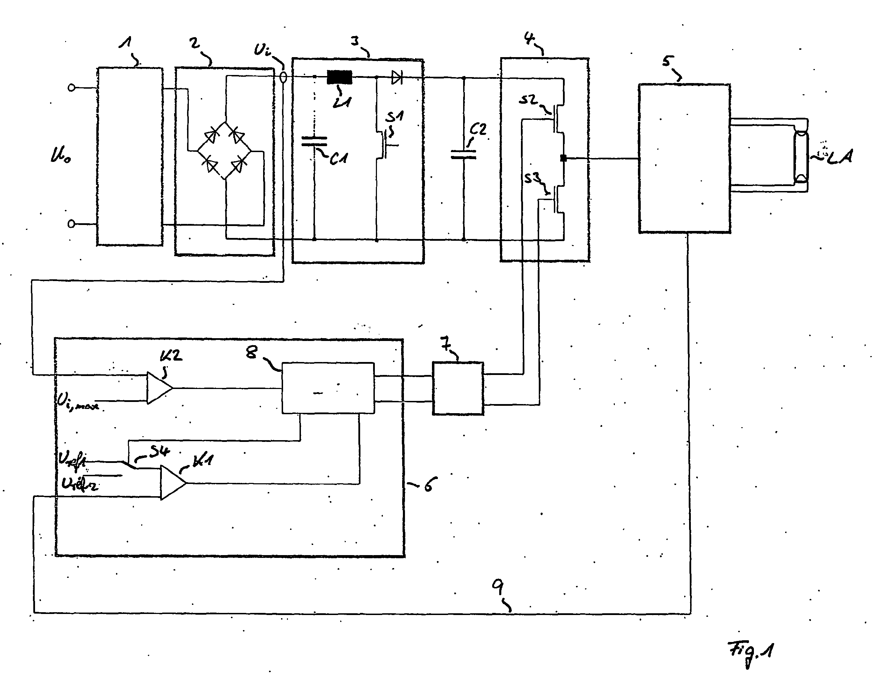

Das in der einzigen Fig. 1 dargestellte Vorschaltgerät ist eingangsseitig über ein Hochfrequenzfilter 1 an die Netzversorgungsspannung U₀ angeschlossen. Am Ausgang des Hochfrequenzfilters 1 befindet sich eine Gleichrichterschaltung 2 in Form eines Vollbrückengleichrichters, welche die Netzversorgungsspannung U₀ in eine gleichgerichtete Eingangsspannung U₁ für eine Glättungsschaltung 3 umsetzt. Die Glättungsschaltung 3 dient zur Oberwellenfilterung und Glättung der Eingangsspannung U₁ und umfasst einen Glättungskondensator C1 sowie einen eine Induktivität L1, einen steuerbaren Schalter in Form eines MOS-Feldeffekttransistors S1 und eine Diode D1 aufweisenden Hochsetzsteller. Anstelle des Hochsetzstellers können auch andere bekannte Glättungsschaltungen verwendet werden.

Durch ein entsprechendes Schalten des MOS-Feldeffekttransitors S1 wird eine über den sich an die Glättungsschaltung 3 anschließenden Speicherkondensator C2 anliegende Zwischenkreisspannung erzeugt, die dem Wechselrichter 4 zugeführt wird. Dieser Wechselrichter wird durch zwei weitere in einer Halbbrückenanordnung angeordnete MOS-Feldeffekttransistoren S2 und S3 gebildet. Durch ein alternierendes hochfrequentes Ansteuern der beiden Feldeffekttransistoren S2, S3 wird am Mittelpunkt der Halbbrücke eine Wechselspannung erzeugt, die dem Lastkreis 5 mit der daran angeschlossenen Gasentladungslampe LA zugeführt wird. Dieses Betreiben der Lampe LA - bei der es sich insbesondere um eine Leuchtstofflampe handelt - mit einer Hochfrequenzspannung ist bereits hinlänglich bekannt und soll daher im folgenden nicht weiter erläutert werden.

Das Ansteuern des MOS-Feldeffekttransistors S 1 der Glättungsschaltung 3 erfolgt durch eine nicht dargestellte Steuereinheit, das Ansteuern der beiden MOS-Feldeffekttransistoren S2 und S3 des Wechselrichters 4 durch die Steuerschaltung 6. Diese erzeugt entsprechende Schaltinformationen und übermittelt sie an eine sich an die Steuerschaltung 6 anschließende Treiberschaltung 7. Die Treiberschaltung 7 wiederum setzt die Schaltinformationen in entsprechende Steuersignale um und übermittelt diese an die Gates der beiden MOS-Feldeffekttransitoren S2, S3. Das Erzeugen der Steuerinformationen erfolgt dabei unter Berücksichtigung eines dem Lastkreis 5 entnommenen Betriebsparameters, der der Steuerschaltung 6 über eine Eingangsleitung 9 zugeführt wird. Bei diesem Betriebsparameter kann es sich beispielsweise um die Lampenspannung, den Lampenstrom oder die Lampenleistung handeln.

Das dem Lastkreis 5 entnommene Signal wird einer Vergleichsschaltung K1 innerhalb der Steuerschaltung 6 zugeführt, die dieses Signal mit einem an einem zweiten Eingang der Vergleichsschaltung K1 anliegenden Referenzwert vergleicht. Der Referenzwert kann dabei mit Hilfe eines Schalters S4 aus zwei verschiedenen Referenzwerten U_{ref1} und U_{ref2} ausgewählt werden, was später ausführlich erläutert wird. Das von der Vergleichsschaltung K1 ermittelte Vergleichsergebnis wird dann einem Steuerblock 8 zugeführt, der in Abhängigkeit von diesem Vergleichsergebnis die Steuerinformationen für den Wechselrichter 4 erzeugt und an die Treiberschaltung 7 übermittelt.

Vorzugsweise ist der soeben beschriebene Regelkreis digital ausgebildet. Dies bedeutet, dass es sich bei der Vergleichsschaltung K1 um einen digitalen Komparator handelt, der das über die Eingangsleitung 9 zugeführte Signal in einen Digitalwert mit einer Genauigkeit von mindestens 2 bit, vorzugsweise von 12 bit umsetzt und ein entsprechendes digitales Ausgangssignal an den Steuerblock 8 übermittelt. Dieser Steuerblock 8 arbeitet ebenfalls digital und berechnet anhand des von der Vergleichsschaltung K1 erhaltenen Werts die für den Lampenbetrieb geeigneten Steuerinformationen. Der Vorteil dieser digitalen Ausgestaltung besteht darin, dass die Steuerschaltung 6 sehr kompakt gehalten werden kann. Durch die Umsetzung in Digitalwerte mit einer hohen Genauigkeit wird ferner eine stabile Regelung sichergestellt. Es besteht allerdings auch die Möglichkeit, den hier dargestellten Regelkreis analog auszuführen.

Nachfolgend soll die erfindungsgemäße Überspannungs-Überwachung erläutert werden. Hierzu wird einer weiteren in der Steuerschaltung 6 angeordneten und als Komparator ausgebildeten Vergleichsschaltung K2 ein die Versorgungsspannung U₀ charakterisierendes Eingangssignal übermittelt. Im dargestellten Beispiel wird hierzu die von dem Gleichrichter 2 gleichgerichtete Versorgungsspannung erfasst, die die Eingangsspannung U₁ für die Glättungsschaltung 3 bildet.

Die zweite Vergleichsschaltung K2 vergleicht das Eingangssignal U₁ mit einem Nennwert U_{i,max} und stellt auf diese Weise fest, ob die Versorgungsspannung U₀ außerhalb eines zulässigen Bereichs liegt. Ist dies der Fall, leitet sie ein entsprechendes Überspannungssignal an den Steuerblock 8 weiter, der infolge davon den Schalter S4, über den der Referenzwert für die erste Vergleichsschaltung K1 des Regelkreises für den Wechselrichter 4 ausgewählt wird, alternierend schaltet. Auf diese Weise wird der Vergleichsschaltung K1 ein sich periodisch verändernder Referenzwert zugeführt. Infolge davon ändert sich der Istwert des Regelkreises für den Wechselrichter 4, so dass die Lampe LA periodisch mit unterschiedlicher Leistung betrieben wird und dementsprechend ihre Helligkeit ändert. Dies äußert sich in einem Flackern der Lampe, was von einem Installateur bei der Inbetriebnahme des Vorschaltgerätes sofort erkannt und als Vorliegen eines Verdrahtungsfehlers interpretiert wird, so dass noch vor einer Schädigung des Vorschaltgeräts aufgrund der Überspannung geeignete Maßnahmen getroffen werden können.

Die hier dargestellte Schaltungsvariante zum Überwachen der Spannungsversorgung und Anzeigen eines Überspannungs-Zustands zeichnet sich durch ihren einfachen Aufbau und die Tatsache aus, dass hierfür nur wenige Bauelemente benötigt werden. Die Vergleichsschaltung K2 kann dabei sowohl in analoger als auch in digitaler Form ausgeführt sein. Eine vorteilhafte Weiterbildung kann auch darin bestehen, den Analog/Digital-Wandler für den Regelkreis des Wechselrichters 4 im Zeitmultiplex zu betreiben und in regelmäßigen Abständen für die Überwachung der Versorgungsspannung U₀ zu verwenden. In diesem Fall kann die erfindungsgemäße Überspannungs-Überwachung sogar ohne ein einziges zusätzliches Bauelement realisiert werden. Selbstverständlich besteht allerdings auch die Möglichkeit, die gesamte Schaltung in analoger Form auszubilden.

Erfindungsgemäß wir die Betriebssicherheit deutlich erhöht, da das Vorliegen eines Überspannungs-Zustands frühzeitig erkannt werden und weitergehende Schäden an dem Vorschaltgerät vermieden werden können.

## Patentansprüche

1. Elektronisches Vorschaltgerät für mindestens eine Gasentladungslampe (LA), vorzugsweise für eine Leuchtstoffröhre, mit einer an eine Versorgungsspannungsquelle anschließbaren Gleichrichterschaltung (2), einer an den Ausgang der Gleichrichterschaltung (2) angeschlossenen Glättungsschaltung (3) zum Erzeugen einer Zwischenkreisspannung (Uz) und einem mit der Zwischenkreisspannung (Uz) gespeisten Wechselrichter (4), an dessen Ausgang ein Anschlüs se für die Lampe (LA) enthaltender Lastkreis (5) angeschlossen ist,
wobei eine Überspannungs-Überwachungsvorrichtung, welche die dem elektronischen Vorschaltgerät zugeführte Versorgungsspannung (U₀) überwacht und für den Fall, dass diese einen vorgegebenen Nennwert (U_{i,max}) überschreitet, ein optisch wahrnehmbares Warnsignal ausgibt und die Überspannungs-Überwachungsvorrichtung für den Fall, dass das Messsignal den Nennwert (U_{i,max}) überschreitet, ein Überspannungssignal an eine Steuerschaltung (6) zum Betreiben des Wechselrichters (4) übermittelt, die als Reaktion auf das Überspannungssignal die Lampe (LA) periodisch ein- und ausschaltet oder die Helligkeit der Lampe (LA) periodisch moduliert.

2. Elektronisches Vorschaltgerät nach Anspruch 1,
**dadurch gekennzeichnet,**
**dass** der Überspannungs-Überwachungsvorrichtung die von der Gleichrichterschaltung (2) gleichgerichtete Versorgungsspannung (U₀) als Eingangsspannung (U₁) zugeführt wird.

3. Elektronisches Vorschaltgerät nach Anspruch 1 oder 2,
**dadurch gekennzeichnet,**
**dass** das von der Überspannungs-Überwachungsvorrichtung erfasste Messsignal mit Hilfe eines Komparators (K2) mit dem Nennwert (U_{i,max}) verglichen wird.

4. Elektronisches Vorschaltgerät nach Anspruch 1 oder 2,
**dadurch gekennzeichnet,**
**dass** das von der Überspannungs-Überwachungsvorrichtung erfasste Messsignal mit Hilfe eines Analog/Digital-Wandlers in einen aus mindestens 2 bit bestehenden Digitalwert umgesetzt und mit dem Nennwert (U_{i,max}) verglichen wird.

5. Elektronisches Vorschaltgerät nach Anspruch 1,
**dadurch gekennzeichnet,**
**dass** die Steuerschaltung (6) mindestens einen Betriebsparameter des Lastkreises (5) erfasst, mit einem Referenzwert (U_{ref1}, U_{ref2}) vergleicht und in Abhängigkeit von dem Vergleichsergebnis Steuersignale zum Ansteuern des Wechselrichters (4) erzeugt,
wobei der Referenzwert (U_{ref1}, U_{ref2}) bei Empfang des Überspannungssignals periodisch verändert wird.

6. Elektronisches Vorschaltgerät nach Anspruch 1 oder 5,
**dadurch gekennzeichnet,**
**dass** die Steuerschaltung (6) einen Analog/Digital-Wandler zum Umsetzen des erfassten Digitalwert aufweist, auf Basis dieses Digitalwerts in einem digitalen Steuerblock (8) eine Schaltinformation zum Betreiben des Wechselrichters (4) berechnet und an eine Treiberschaltung (7) übermittelt, welche diese Schaltinformation in ein entsprechendes Steuersignal zum Ansteuern des Wechselrichters (4) umsetzt.

7. Elektronisches Vorschaltgerät nach Anspruch 6,
**dadurch gekennzeichnet,**
**dass** die Steuerschaltung (6) den Lampenstrom erfasst.

8. Elektronisches Vorschaltgerät nach Anspruch 6,
**dadurch gekennzeichnet,**
**dass** die Steuerschaltung (6) die Lampenspannung erfasst.

9. Elektronisches Vorschaltgerät nach einem der Ansprüche 1 und 5 bis 8,
**dadurch gekennzeichnet,**
**dass** die Überwachungsschaltung (10) Bestandteil der Steuerschaltung (6) ist.

10. Elektronisches Vorschaltgerät nach Anspruch 4 und einem der Ansprüche 1 und 5 bis 9,
**dadurch gekennzeichnet,**
**dass** die Steuerschaltung (6) zum Umsetzen des erfassten Betriebsparameters und des von der Überspannungs-Überwachungsvorrichtung erfassten Messsignals einen einzigen im Zeitmultiplex arbeitenden Analog/Digital-Wandler aufweist.

11. Elektronisches Vorschaltgerät nach einem der Ansprüche 4 bis 10,
**dadurch gekennzeichnet,**
**dass** der bzw. die Analog/Digital-Wandler den bzw. die erfassten Betriebsparameter oder Messwerte in Digitalwerte mit einer Genauigkeit von 12 bit umsetzen.

12. Elektronisches Vorschaltgerät nach einem der vorherigen Ansprüche,
**dadurch gekennzeichnet,**
**dass** die Steuerschaltung (6) als anwendungsspezifische integrierte Schaltung ausgebildet ist.

## Claims

1. Electronic ballast for at least one gas-discharge lamp (LA), preferably for a fluorescent lamp, having a rectifier circuit (2) connectable to a supply voltage source, a smoothing circuit (3) connected to the output of the rectifier circuit (2) for producing an intermediate circuit voltage (U_{z}), and an inverter (4) fed with the intermediate circuit voltage (U_{z}), to the output of which a terminal for the load circuit (5) containing the lamp (LA) is connected,
wherein an overvoltage monitoring device, which monitors the supply voltage (U₀) delivered to the electronic ballast and in the event that this exceeds a predetermined nominal value (U_{i, max}) issues a visually perceptible warning signal, and the overvoltage monitoring device in the event that the measurement signal exceeds the nominal value (U_{i, max}) transmits an overvoltage signal to a control circuit (6) for operating the inverter (4), which in reaction to the overvoltage signal periodically turns on and turns off the lamp (LA) or periodically modulates the brightness of the lamp (LA).

2. Electronic ballast according to claim 1,
**characterised in that**,
there is delivered to the overvoltage monitoring device as input voltage (Uᵢ) the supply voltage (U₀) rectified by the rectifier circuit (2).

3. Electronic ballast according to claim 1 or 2,
**characterised in that**,
the measurement signal detected by the overvoltage monitoring device is compared with the nominal value (U_{i, max}) with the aid of a comparator (K2).

4. Electronic ballast according to claim 1 or 2,
**characterised in that**,
the measurement signal detected by the overvoltage monitoring device is converted with the aid of an analog/digital converter into a digital value of at least 2 bits and compared with the nominal value (U_{i, may}).

5. Electronic ballast according to claim 1,
**characterised in that**,
the control circuit (6) detects at least one operating parameter of the load circuit (5), compares this at least one operating parameter with a reference value (U_{ref1}, U_{ref2}) and in dependence upon the comparison result produces control signals for the control of the inverter (4), wherein the reference value (U_{ref1}, U_{ref2}) is, upon reception of the overvoltage signal, changed periodically.

6. Electronic ballast according to claim 1 or 5,
**characterised in that**,
the control circuit (6) has an analog/digital converter for converting the detected operating parameter of the load circuit (5) into a digital value of at least 2 bits, calculates, based on this digital value, in a digital control block (8), switching information for operating the inverter (4), and transmits this information to a driver circuit (7) which converts this switching information into a corresponding control signal for the control of the inverter (4).

7. Electronic ballast according to claim 6,
**characterised in that**,
the control circuit (6) detects the lamp current.

8. Electronic ballast according to claim 6,
**characterised in that**,
the control circuit (6) detects the lamp voltage.

9. Electronic ballast according to any of claims 1 and 5 to 8,
**characterised in that**,
the monitoring circuit (10) is component of the control circuit (6).

10. Electronic ballast according to claim 4 and any of claims 1 and 5 to 9,
**characterised in that**,
the control circuit (6) for converting the detected operating parameter and the measurement signal detected by the overvoltage monitoring device has a single analog/digital converter working in time multiplex.

11. Electronic ballast according to any of claims 4 to 10,
**characterised in that**,
the analog/digital converter or converters convert the detected operating parameter or parameters, or measurement value or values, into digital values having a precision of 12 bits.

12. Electronic ballast according to any of the preceding claims,
**characterised in that**,
the control circuit (6) is formed as an application-specific integrated circuit.

## Revendications

1. Ballast électronique pour au moins une lampe à décharge de gaz (LA), de préférence pour un tube incandescent,
avec un circuit redresseur (2) pouvant être connecté à une source de tension d'alimentation,
un circuit de filtrage (3) connecté à la sortie du circuit redresseur (2) pour générer une tension de circuit intermédiaire (Uz) et
un onduleur (4) alimenté par la tension de circuit intermédiaire (Uz), à la sortie duquel onduleur est connecté un circuit de charge (5) comprenant des connecteurs pour la lampe (LA),
avec un dispositif de surveillance de surtension qui surveille la tension d'alimentation (U0) fournie au ballast électronique et, au cas où celle-ci dépasse une valeur nominale prédéterminée (Ui,max), délivre un signal d'avertissement optique perceptible,
le dispositif de surveillance de surtension transmettant, au cas où le signal de mesure dépasse la valeur nominale (Ui,max), un signal de surtension à un circuit de commande (6) pour faire fonctionner l'onduleur (4),
lequel circuit de commande (6), en réaction à un signal de surtension, allume et éteint périodiquement la lampe (LA) ou module périodiquement l'intensité lumineuse de la lampe (LA).

2. Ballast électronique selon la revendication 1,
**caractérisé en ce que** le dispositif de surveillance de surtension est alimenté par une tension d'entrée (Ui) correspondant à la tension d'alimentation (U0) redressée par le redresseur (2).

3. Ballast électronique selon la revendication 1 ou 2,
**caractérisé en ce que** le signal de mesure détecté par le dispositif de surveillance de surtension est comparé à la valeur nominale (Ui,max) à l'aide d'un comparateur (K2).

4. Ballast électronique selon la revendication 1 ou 2,
**caractérisé en ce que** le signal de mesure détecté par le dispositif de surveillance de surtension est converti en une valeur numérique composée d'au moins 2 bit à l'aide d'un convertisseur analogique /numérique, et est comparé à la valeur nominale (Ui,max).

5. Ballast électronique selon la revendication 1,
**caractérisé en ce que** le circuit de commande (6) détecte au moins un paramètre de fonctionnement du circuit de charge (5), compare celui-ci à une valeur de référence (Uref1, Uref2) et génère, en fonction du résultat de la comparaison, des signaux de commande pour commander l'onduleur (4),
la valeur de référence (Uref1, Uref2) variant périodiquement à la réception du signal de surtension.

6. Ballast électronique selon la revendication 1 ou 5,
**caractérisé en ce que** le circuit de commande (6) présente un convertisseur analogique /numérique pour convertir le paramètre de fonctionnement détecté du circuit de charge (5) en une valeur numérique composée d'au moins 2 bit,
calcule sur le fondement de cette valeur numérique dans un bloc numérique de commande (8) une information de commande pour faire fonctionner l'onduleur (4) et
la transmet à un circuit d'attaque (7), lequel convertit cette information de commande en un signal de commande correspondant pour commander l'onduleur (4).

7. Ballast électronique selon la revendication 6,
**caractérisé en ce que** le circuit de commande (6) détecte le courant de la lampe.

8. Ballast électronique selon la revendication 6,
**caractérisé en ce que** le circuit de commande (6) détecte la tension de la lampe.

9. Ballast électronique selon l'une des revendications 1 et 5 à 8,
**caractérisé en ce que** le circuit de surveillance (10) est une composante du circuit de commande (6)

10. Ballast électronique selon la revendication 4 et l'une des revendications 1 et 5 à 9,
**caractérisé en ce que** le circuit de commande (6) pour convertir le paramètre de fonctionnement
détecté et le signal de mesure détecté par le dispositif de surveillance de surtension présente un seul convertisseur analogique /numérique travaillant en multiplexage temporel.

11. Ballast électronique selon l'une des revendications 4 à 10,
**caractérisé en ce que** le ou les convertisseurs analogiques/numériques convertissent le ou les paramètres de fonctionnement ou valeurs de mesure détectés en valeur numérique avec une précision de 12 bit.

12. Ballast électronique selon l'une des revendications precedentes,
**caractérisé en ce que** le circuit de commande (6) est formé comme circuit intégré d'application spécifique.
